# EUROPEAN PATENT APPLICATION

(11) **EP 4 242 092 A1**
(43) Date of publication of application: **13.09.2023**
(21) Application number: 23158209.9
(22) Date of filing: 23.02.2023
(51) Int. Cl.: B62J 9/14, B62J 43/20

(54) **SCOOTER TYPE ELECTRIC VEHICLE**

(30) Priority: 08.03.2022 JP 2022035400
(71) Applicant: Yamaha Hatsudoki Kabushiki Kaisha, Iwata-shi, Shizuoka 438-8501 (JP)
(72) Inventor: Tsuruhashi, Hiroyuki, Iwata-shi, Shizuoka-ken, 438-0026 (JP); Sato, Takashi, Iwata-shi, Shizuoka-ken, 438-0026 (JP); Matsuzawa, Torao, Iwata-shi, Shizuoka-ken, 438-0026 (JP)
(74) Representative: Grünecker Patent- und Rechtsanwälte PartG mbB

(57) **Abstract**

A scooter type electric vehicle 1 according to an embodiment includes: a front wheel 3 and a rear wheel 4; an electric motor 47; a floorboard 6 that is located between the front wheel 3 and the rear wheel 4, and on which a rider's feet are placed; a seat 5 that is located behind and diagonally above the floorboard 6, and on which the rider sits; a container box 10 located below the seat 5, and having a first front wall 10F, a first left side wall 10L, and a first right side wall 10R; a cover 20 that has a second front wall 23 covering the first front wall 10F, a second left side wall 24L covering the first left side wall 10L, and a second right side wall 24R covering the first right side wall 10R; and a first electrical component 42 located between the first front wall 10F and the second front wall 23, a second electrical component 43 located between the first left side wall 10L and the second left side wall 24L, and a third electrical component 41 located between the first right side wall 10R and the second right side wall 24R.

## Description

The present invention relates to scooter type electric vehicles that are powered by an electric motor to travel.

There are some scooter type two-wheeled electric vehicles that have an electric motor as a source of power for traveling (see, for example, JP 2000-253591 A).

The electric motor operates with electric power supplied from a battery mounted on the vehicle to rotate. The rotation of the electric motor is transmitted to a wheel, thereby allowing the vehicle to travel.

A scooter type two-wheeled electric vehicle is equipped with various parts including electrical components. However, in a scooter type two-wheeled electric vehicle, a number of parts need to be arranged within a limited space in the body of the vehicle, and therefore, it is not easy to allocate a space for arrangement of electrical components.

There has been a demand for further improvement to arrangement of electrical components in a scooter type electric vehicle. It Is the object of the present invention to provide a scooter type electric vehicle having a compact structure. According to the present invention said object is solved by a scooter type electric vehicle having the features of independent claim 1. Preferred embodiments are laid down in the dependent claims.

A scooter type electric vehicle according to an embodiment includes: a front wheel and a rear wheel; an electric motor that produces rotation according to power supplied from a battery, and drives at least one of the front wheel and the rear wheel; a floorboard that is located between the front wheel and the rear wheel, and on which a rider's feet are placed; a seat that is located behind and diagonally above the floorboard, and on which the rider sits; a container box that is located below the seat, and has a first front wall, a first left side wall, and a first right side wall; a cover that has a second front wall covering the first front wall, a second left side wall covering the first left side wall, and a second right side wall covering the first right side wall; and a first electrical component that is located between the first front wall and the second front wall, a second electrical component that is located between the first left side wall and the second left side wall, and a third electrical component that is located between the first right side wall and the second right side wall.

If an attempt is made to arrange a plurality of electrical components that are mounted on a scooter type electric vehicle all in one place, it is necessary to allocate, in the vehicle, a large space for arranging the plurality of electrical components together. According to an embodiment, a plurality of electrical components are arranged at distributed positions that are a position between the first front wall of the container box and the second front wall of the cover, a position between the first left side wall of the container box and the second left side wall of the cover, and a position between the first right side wall of the container box and the second right side wall of the cover. Therefore, it is not necessary to allocate, in the vehicle, a large space for arranging a plurality of electrical components all in one place. By utilizing spaces between the container box and the cover, a slim volume can accommodate all of the electrical components.

A plurality of electrical components are distributed, but are arranged around the container box, so that a distance between each electrical component is relatively short. Therefore, the length of an electrical cable connecting between each electrical component can be reduced. For example, as a large current flows through an electrical component that is provided on an electrical path between the battery and the electric motor, an electrical cable connected to such electrical components has a large cross-sectional area. By providing a plurality of electrical components around the container box, the lengths of electrical cables having a large cross-sectional area can be reduced, resulting in a reduction in a space for arranging the electrical cables. The reduction in the length of an electrical cable having a large cross-sectional area can lead to a reduction in weight and cost.

As electrical components are located around the container box, i.e., at a relatively high position, the electrical components are less likely to get wet even if water on the road surface enters the vehicle.

In an embodiment, the battery may be located in the container box.

As a large current flows through an electrical cable that connects the battery and an electrical component, the electrical cable has a large cross-sectional area. By providing a plurality of electrical components around the container box, the lengths of electrical cables having a large cross-sectional area that connect the battery and the electrical components can be reduced.

In an embodiment, the battery may be removably attached to the scooter type electric vehicle.

The battery can be charged by being connected to an external charger with the battery removed from the vehicle. For example, even when no charging equipment is provided in a parking garage, the battery can be charged.

In an embodiment, the first electrical component, the second electrical component, and the third electrical component may have different functions.

As it is not necessary to allocate, in the vehicle, a large space for arranging a plurality of electrical components having different functions all in one place, a slim volume can accommodate all of the electrical components.

In an embodiment, the first electrical component, the second electrical component, and the third electrical component may each be any of a control device that controls an operation of the scooter type electric vehicle, a converter that changes the magnitude of the output voltage of the battery and outputs the resultant voltage, a battery switcher that switches batteries for use, a positioning device that detects a location of the scooter type electric vehicle in a geographic coordinate system, and a communication device that performs data communication between the scooter type electric vehicle and an external device.

It is not necessary to allocate, in the vehicle, a large space for arranging a plurality of electrical components all in one place, and a slim volume can accommodate all of the electrical components.

In an embodiment, the first electrical component located between the first front wall and the second front wall may be thicker than the second electrical component and the third electrical component.

It is relatively easy to increase a distance between the first front wall and the second front wall. Therefore, by locating an electrical component having a greatest thickness in front of the container box, a width in a leftward/rightward direction of the cover covering the container box can be reduced.

In an embodiment, the scooter type electric vehicle may further include a frame that extends through a position between the first left side wall and the second left side wall and a position between the first right side wall and the second right side wall. At least one of the second electrical component and the third electrical component may be located inward of the frame in a width direction of the scooter type electric vehicle.

Even if an external force is applied to a side portion of the scooter type electric vehicle, the external force can be substantially prevented from being applied to an electrical component.

In an embodiment, the scooter type electric vehicle may further include a frame that extends through a position between the first left side wall and the second left side wall and a position between the first right side wall and the second right side wall. At least one of the second electrical component and the third electrical component may be located on the frame.

The second electrical component and the third electrical component can be easily located between the container box and the cover.

In an embodiment, at least one of the second electrical component and the third electrical component may be located at or behind a center portion of the container box in a forward/rearward direction of the scooter type electric vehicle.

A front left diagonal portion and a front right diagonal portion of the cover covering the container box can be slimmed, and therefore, a portion for the rider's feet of the scooter type electric vehicle can have a simple design.

In an embodiment, the scooter type electric vehicle may further include a frame that extends through a position between the first left side wall and the second left side wall and a position between the first right side wall and the second right side wall. The frame is shaped to extend rearward and diagonally upward at a position lateral to the container box. At least one of the second electrical component and the third electrical component may be located on the frame at or behind the center portion of the container box in a forward/rearward direction of the scooter type electric vehicle.

A front left diagonal portion and a front right diagonal portion of the cover covering the container box can be slimmed, and therefore, a portion for the rider's feet of the scooter type electric vehicle can have a simple design.

The second electrical component and the third electrical component can be located at a higher position. Therefore, the second electrical component and the third electrical component are less likely to get wet even if water on the road surface enters the vehicle.

In an embodiment, the scooter type electric vehicle may further include a swingarm that supports the rear wheel. The electric motor may be provided on the swingarm.

As it is not necessary to allocate a space for arranging the electric motor in the inside of the vehicle body of the scooter type electric vehicle, the flexibility of arrangement of parts other than the electric motor can be increased.

In an embodiment, the scooter type electric vehicle may be a scooter type two-wheeled electric vehicle.

In a scooter type two-wheeled electric vehicle, a number of parts need to be arranged within a limited space in the vehicle, and therefore, a limitation is imposed on arrangement of the parts. According to an embodiment, a plurality of electrical components are arranged at distributed positions that are a position between the first front wall of the container box and the second front wall of the cover, a position between the first left side wall of the container box and the second left side wall of the cover, and a position between the first right side wall of the container box and the second right side wall of the cover. By utilizing spaces between the container box and the cover, a slim volume can accommodate all of the electrical components.

According to an embodiment, a plurality of electrical components are arranged at distributed positions that are a position between the first front wall of the container box and the second front wall of the cover, a position between the first left side wall of the container box and the second left side wall of the cover, and a position between the first right side wall of the container box and the second right side wall of the cover. Therefore, it is not necessary to allocate, in the vehicle, a large space for arranging a plurality of electrical components all in one place. By utilizing spaces between the container box and the cover, a slim volume can accommodate all of the electrical components.

A plurality of electrical components are distributed, but are arranged around the container box, so that a distance between each electrical component is relatively short. Therefore, the length of an electrical cable connecting between each electrical component can be reduced. For example, as a large current flows through an electrical component that is provided on an electrical path between the battery and the electric motor, an electrical cable connected to such electrical components has a large cross-sectional area. By providing a plurality of electrical components around the container box, the lengths of electrical cables having a large cross-sectional area can be reduced, resulting in a reduction in a space for arranging the electrical cables. The reduction in the length of an electrical cable having a large cross-sectional area can lead to a reduction in weight and cost.

As electrical components are located around the container box, i.e., at a relatively high position, the electrical components are less likely to get wet even if water on the road surface enters the vehicle.

### BRIEF DESCRIPTION OF THE DRAWINGS

FIG. 1 is a left side view illustrating a scooter type electric vehicle 1 according to an embodiment.
FIG. 2 is a left side view illustrating a vehicle body frame 30 and a container box 10 according to an embodiment.
FIG. 3 is a perspective view of a vehicle body frame 30 and a container box 10 according to an embodiment as viewed diagonally from the left front.
FIG. 4 is a perspective view of a vehicle body frame 30 and a container box 10 according to an embodiment as viewed diagonally from the right front.
FIG. 5 is a diagram illustrating a container box 10 with batteries 51 and 52 contained therein according to an embodiment.
FIG. 6 is a block diagram illustrating an example of a plurality of electrical components provided in a scooter type electric vehicle 1 according to an embodiment.
FIG. 7 is a diagram illustrating a container box 10, a seat cowling 23, and a rear cowling 24 according to an embodiment.

### DETAILED DESCRIPTION

Preferred embodiments will be described below with reference to the accompanying drawings. In the description of the embodiments, like parts are indicated by like reference characters and will not be redundantly described. The front and rear, top and bottom, and left and right of a scooter type electric vehicle each have a meaning that is defined in relation to a rider who is sitting on the seat of the vehicle.

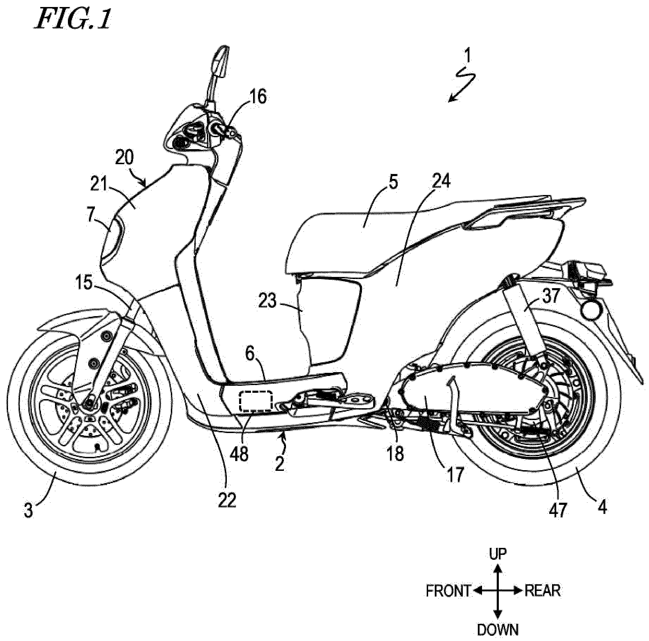

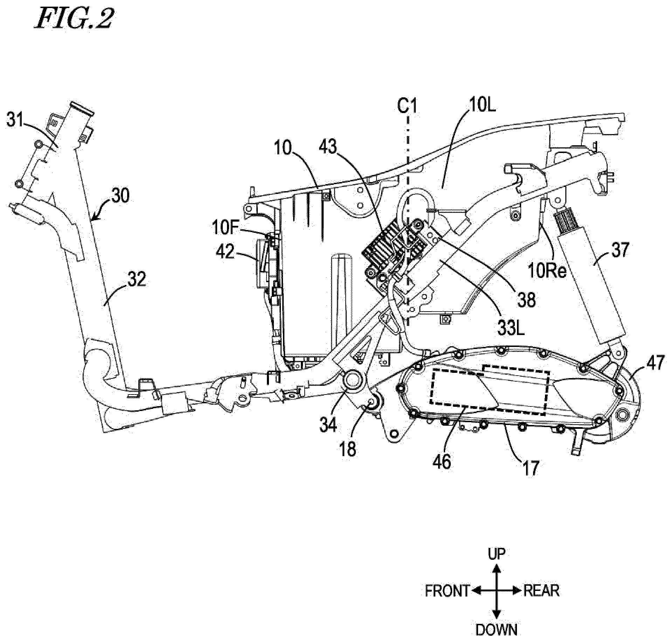

FIG. 1 is a left side view illustrating a scooter type electric vehicle 1 according to an embodiment. In the example illustrated in FIG. 1, the vehicle 1 is a scooter type two-wheeled electric vehicle. The vehicle 1 may be a scooter type electric vehicle with three or more wheels. An example in which the vehicle 1 is a scooter type two-wheeled electric vehicle will be described below. FIG. 2 is a left side view illustrating a vehicle body frame 30 and a container box 10 included in the scooter type two-wheeled electric vehicle 1.

The scooter type two-wheeled electric vehicle 1 includes a vehicle body 2, a front wheel 3, and a rear wheel 4. The vehicle body 2 has a structure including a vehicle body frame 30 (FIG. 2) and a vehicle body cover 20 (FIG. 1) covering at least a portion of the vehicle body frame 30. The vehicle body frame 30 is, for example, an underbone frame. The vehicle body frame 30 has a head pipe 31 and a main frame 32. A steering shaft is inserted in the head pipe 31. A steering handlebar 16 is provided at an upper end of the steering shaft. A front fork 15 is provided at a lower end of the steering shaft. The front wheel 3 is rotatably supported at a lower end of the front fork 15.

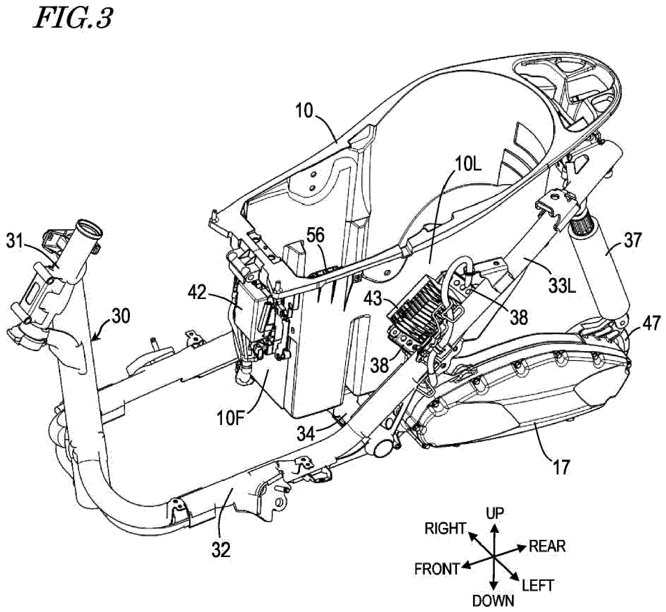

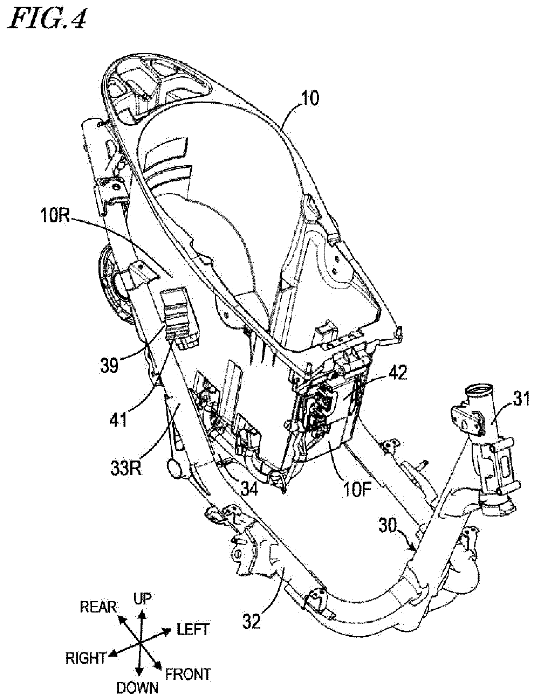

FIG. 3 is a perspective view of the vehicle body frame 30 and the container box 10 as viewed diagonally from the left front. FIG. 4 is a perspective view of the vehicle body frame 30 and the container box 10 as viewed diagonally from the right front. FIGS. 3 and 4 both illustrate the vehicle body frame 30 and the container box 10 as viewed diagonally from above.

As illustrated in FIGS. 2 to 4, the main frame 32 is shaped to extend from the head pipe 31 rearward and diagonally downward, then extend leftward and rightward, and then extend rearward. The vehicle body frame 30 further has rear frames 33L and 33R. The rear (left) frame 33L is shaped to extend from a left rear portion of the main frame 32 rearward and diagonally upward. The rear (right) frame 33R is shaped to extend from a right rear portion of the main frame 32 rearward and diagonally upward.

A crossing member 34, which extends in a leftward/rightward direction, is provided at a rear portion of the main frame 32 and a front portion of the rear frames 33L and 33R. The crossing member 34 supports a swingarm 17 through a pivot 18 in a manner that allows the swingarm 17 to pivot. An electric motor 47 is provided at a rear portion of the swingarm 17. The electric motor 47 is an in-wheel motor. The rear wheel 4 (FIG. 1) is mounted on the electric motor 47. The electric motor 47 may be either a direct-drive in-wheel motor or a gear-reduction in-wheel motor. The swingarm 17 rotatably supports the rear wheel 4 through the electric motor 47. In this example, the rear wheel 4 is a driving wheel, and the front wheel 3 is a trailing wheel. A rear portion of the rear frame 33L, 33R supports an upper portion of a shock absorber 37 in a manner that allows the shock absorber 37 to oscillate. A lower portion of the shock absorber 37 supports the swingarm 17 in a manner that allows the swingarm 17 to pivot. A motor control unit (MCU) 46 that controls an operation of the electric motor 47 is provided in the swingarm 17.

By providing the electric motor 47 and the MCU 46 on and in the swingarm 17, it is not necessary to allocate a space for arranging the electric motor 47 and the MCU 46 in the inside of the vehicle body 2. Therefore, the flexibility of arrangement of parts other than the electric motor 47 and the MCU 46 can be increased.

As illustrated in FIG. 1, a floorboard 6 for the rider's feet is provided between the front wheel 3 and the rear wheel 4 in a forward/rearward direction of the vehicle 1. The floorboard 6 is supported by the main frame 32. A seat 5 on which the rider sits is provided at an upper portion of the vehicle body 2. The seat 5 is located behind and diagonally above the floorboard 6. The container box 10 (FIG. 2) is provided below the seat 5.

The container box 10 is located between the rear frames 33L and 33R in a leftward/rightward direction of the vehicle 1. The container box 10 is supported by the rear frames 33L and 33R and the crossing member 34.

The container box 10 is open upward. The seat 5, which is located on an upper portion of the container box 10, serves as a lid for the container box 10. The seat 5, which serves as a lid for the container box 10, is openable and closeable through, for example, a hinge. The space inside the container box 10 can accommodate the rider's baggage, a battery, and the like. In the case in which a battery is contained in the container box 10, a connector 56 (FIG. 3) for connecting the battery is provided in the container box 10.

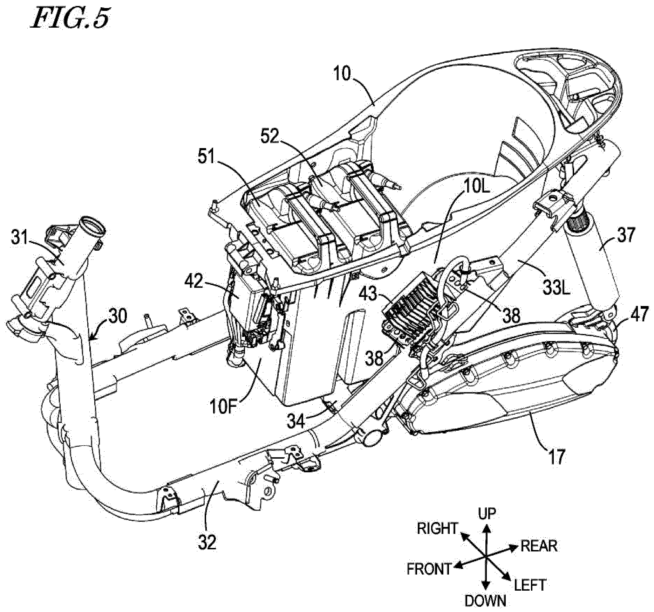

FIG. 5 is a diagram illustrating an example of the container box 10 with batteries contained therein. In the example of FIG. 5, two batteries 51 and 52 are provided in the container box 10. In the case in which a plurality of batteries are contained in the container box 10, a plurality of connectors 56 (FIG. 3) for connecting the batteries are provided. In the example of FIG. 5, a remaining space behind the batteries 51 and 52 can accommodate the rider's baggage and the like. The container box 10 may accommodate one or three or more batteries.

The connectors 56 for connecting the batteries 51 and 52 may be located at a position higher than a bottom portion of the container box 10. This can substantially prevent the electrode portions of the batteries 51 and 52 and the connectors 56 from getting wet even when water enters the container box 10.

The batteries 51 and 52 may be removably attached to the vehicle 1 without the need of a tool. The batteries 51 and 52, which are removable, can be charged by being connected to an external charger with the batteries 51 and 52 removed from the vehicle 1. For example, even when no charging equipment is provided in a parking garage, the batteries 51 and 52 can be charged in other places such as home.

The vehicle body cover 20 (FIG. 1) is shaped to cover the vehicle body frame 30 and the container box 10. The vehicle body cover 20 has a front cowling 21 and a leg cowling 22, which cover a portion of a front portion of the vehicle 1. A headlamp 7 is provided at a front portion of the front cowling 21.

The vehicle body cover 20 further has a seat cowling 23 and a rear cowling 24, which cover a portion of a rear portion of the vehicle 1. The seat cowling 23 and the rear cowling 24 covers the container box 10 and the rear frames 33L and 33R.

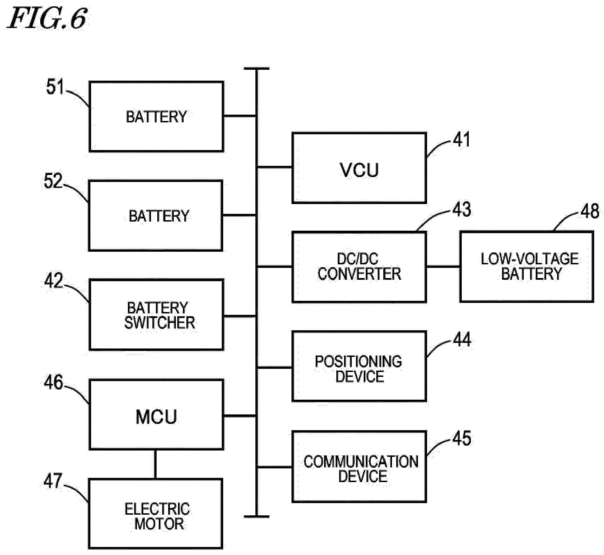

Next, a plurality of electrical components that are provided in the scooter type two-wheeled electric vehicle 1 will be described. FIG. 6 is a block diagram illustrating an example of a plurality of electrical components provided in the scooter type two-wheeled electric vehicle 1. A plurality of electrical components having different functions are provided in the scooter type two-wheeled electric vehicle 1.

A vehicle control unit (VCU) 41 controls operations of the entire scooter type electric vehicle 1. The batteries 51 and 52 output electric power for driving the electric motor 47. The output voltages of the batteries 51 and 52 are each, for example, but not limited to, 50 V. A battery switcher 42 switches a battery that is used between the batteries 51 and 52. The battery switcher 42 is, for example, a relay. The VCU 41 controls an operation of the battery switcher 42 to choose a battery that is used from the batteries 51 and 52. For example, when the state of charge of a battery that is currently used is low, the other battery can replace that battery.

A low-voltage battery 48 supplies electric power to an electrical component that operates with a low voltage. The "low voltage" means a voltage that is lower than the output voltages of the batteries 51 and 52. The low voltage is, for example, but not limited to, 12 V. The low-voltage battery 48 is located, for example, below the floorboard 6 (FIG. 1), or alternatively, may be located at other positions.

The DC/DC converter 43 reduces a voltage received from the battery 51 or 52 through the battery switcher 42, and outputs the reduced voltage. The output voltage of the DC/DC converter 43 is, for example, but not limited to, 12 V. The electric power output by the DC/DC converter 43 is supplied to the low-voltage battery 48, which is in turn charged. The electric power output by the DC/DC converter 43 may be directly supplied to an electrical component that operates with a low voltage.

The motor control unit (MCU) 46 generates a drive current from a current received from the battery 51 or 52 through the battery switcher 42, and outputs the drive current to the electric motor 47. Rotation produced by the electric motor 47 is transmitted to the rear wheel 4, which in turn allows the vehicle 1 to travel.

The positioning device 44 is capable of detecting a location (geographic coordinates) of the vehicle 1 in a geographic coordinate system. The positioning device 44 receives a GNSS signal transmitted from a GNSS satellite, and performs positioning based on the GNSS signal. GNSS collectively refers to satellite-based positioning systems, such as the global positioning system (GPS), the quasi-zenith satellite system (QZSS, for example, Michibiki), GLONASS, Galileo, and BeiDou. Positioning may be performed by any technique that can obtain positional information having a required precision. The positioning technique may, for example, be interference positioning or relative positioning. The detection of the geographic coordinates of the vehicle 1 allows displaying of a map indicating the current location of the vehicle 1, or navigation to a destination.

A communication device 45 is used for communication between the vehicle 1 and an external device through a communication network. The communication device 45 may allow wireless communication that uses mobile telephony or satellite communications. When the rider is carrying a mobile router, the communication device 45 may be connected to the mobile router by wired or wireless communication. In that case, the communication device 45 is connected to the communication network through the mobile router. The communication device 45 may communicate with other vehicles, i.e., may perform inter-vehicle communication.

The VCU 41 may be connected to a plurality of electrical components through a bus to control operations of the plurality of electrical components. The VCU 41 may be connected to each electrical component without through a bus.

It should be noted that in the case in which information about the location of the vehicle 1 is not used, the vehicle 1 may not include the positioning device 44. In the case in which the vehicle 1 does not communicate with any external device, the vehicle 1 may not include the communication device 45. In the case in which the vehicle 1 includes only one battery for supplying power to the electric motor 47, the vehicle 1 may not include the battery switcher 42.

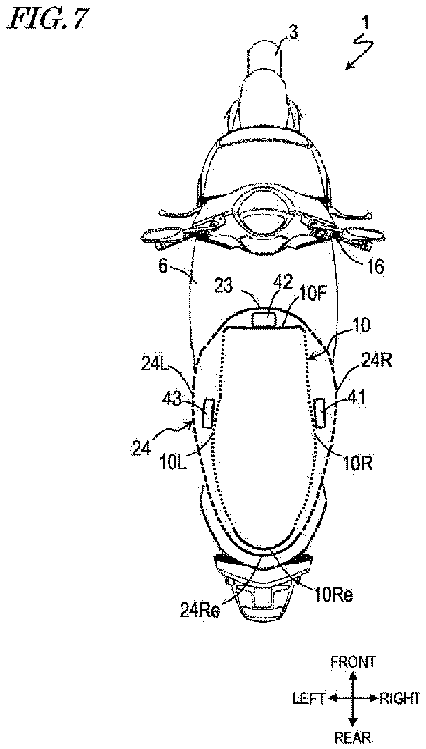

Next, an example of arrangement of a plurality of electrical components will be described. FIG. 7 is a diagram illustrating the container box 10, the seat cowling 23, and the rear cowling 24 as viewed from above.

As illustrated in FIGS. 3, 4, and 7, the container box 10 has a first front wall 10F, a first left side wall 10L, a first right side wall 10R, and a first rear wall 10Re. The first front wall 10F is located at a front portion of the container box 10, mainly extending in an upward/downward direction and a leftward/rightward direction. The first left side wall 10L is located at a left portion of the container box 10, mainly extending in a forward/rearward direction and an upward/downward direction. The first right side wall 10R is located at a right portion of the container box 10, mainly extending in a forward/rearward direction and an upward/downward direction. The first rear wall 10Re is located at a rear portion of the container box 10, mainly extending in an upward/downward direction and a leftward/rightward direction. In FIG. 7, the first front wall 10F and the first rear wall 10Re are indicated by a solid line, and the first left side wall 10L and the first right side wall 10R are indicated by a dotted line. The first front wall 10F, the first rear wall 10Re, the first left side wall 10L, and the first right side wall 10R may be formed integrally or separately.

The rear cowling 24 has a second left side wall 24L, a second right side wall 24R, and a second rear wall 24Re. The second left side wall 24L is located to the left of the first left side wall 10L of the container box 10 and the rear frame 33L (FIG. 3), covering the first left side wall 10L and the rear frame 33L. The second right side wall 24R is located to the right of the first right side wall 10R of the container box 10 and the rear frame 33R (FIG. 4), covering the first right side wall 10R and the rear frame 33R. The second rear wall 24Re is located behind the first rear wall 10Re of the container box 10, covering the first rear wall 10Re. The second left side wall 24L, the second right side wall 24R, and the second rear wall 24Re may be formed integrally or separately.

The seat cowling 23 is located in front of the first front wall 10F of the container box 10, covering the first front wall 10F. The seat cowling 23 is a second front wall covering the first front wall 10F. In FIG. 7, the second front wall 23 and the second rear wall 24Re are indicated by a solid line, and the second left side wall 24L and the second right side wall 24R are indicated by a dashed line. The rear frame 33L passes through a position between the first left side wall 10L and the second left side wall 24L. The rear frame 33R passes through a position between the first right side wall 10R and the second right side wall 24R.

In this embodiment, an electrical component is provided at each of a position between the first front wall 10F and the second front wall 23, a position between the first left side wall 10L and the second left side wall 24L, and a position between the first right side wall 10R and the second right side wall 24R.

As an example, the battery switcher 42, which is one of the plurality of electrical components, is located between the first front wall 10F and the second front wall 23. The DC/DC converter 43 is located between the first left side wall 10L and the second left side wall 24L. The VCU 41 is located between the first right side wall 10R and the second right side wall 24R.

The battery switcher 42 is attached to the first front wall 10F using, for example, a fastening device such as a bolt. By attaching the battery switcher 42 to the first front wall 10F, the battery switcher 42 can be easily located between the first front wall 10F and the second front wall 23.

The DC/DC converter 43 is attached to the rear frame 33L through, for example, a stay 38. The VCU 41 is attached to the rear frame 33R through, for example, a stay 39. By attaching the DC/DC converter 43 to the rear frame 33L, the DC/DC converter 43 can be easily located between the first left side wall 10L and the second left side wall 24L. By attaching the VCU 41 to the rear frame 33R, the VCU 41 can be easily located between the first right side wall 10R and the second right side wall 24R.

If an attempt is made to arrange a plurality of electrical components that are mounted on the scooter type two-wheeled electric vehicle 1 all in one place, it is necessary to allocate, in the vehicle 1, a large space for arranging the plurality of electrical components together. In this embodiment, a plurality of electrical components are arranged at distributed positions, i.e., a position between the first front wall 10F and the second front wall 23, a position between the first left side wall 10L and the second left side wall 24L, and a position between the first right side wall 10R and the second right side wall 24R. Therefore, it is not necessary to allocate, in the vehicle 1, a large single space for arranging a plurality of electrical components all in one place. By utilizing spaces between the container box 10 and the cowlings 23 and 24, a slim volume can accommodate all of the electrical components.

A plurality of electrical components are distributed, but are arranged around the container box 10, so that a distance between each electrical component is relatively short. Therefore, the length of an electrical cable connecting between each electrical component can be reduced.

In this embodiment, the batteries 51 and 52 are located in the container box 10. For example, as a large current flows through an electrical component that is provided on an electrical path between the battery 51, 52 and the electric motor 47, an electrical cable connected to such an electrical component has a large cross-sectional area. By providing a plurality of electrical components around the container box 10, the lengths of electrical cables having a large cross-sectional area can be reduced, resulting in a reduction in a space for arranging the electrical cables. The reduction in the length of an electrical cable having a large cross-sectional area can lead to a reduction in weight and cost.

In addition, as electrical components are located around the container box 10, i.e., at a relatively high position, the electrical components are less likely to get wet even if water on the road surface enters the vehicle 1.

An electrical component provided in front of the container box 10 may have a thickness greater than that of an electrical component provided laterally to the container box 10. Here, the thickness of an electrical component may refer to a length of the electrical component in a direction in which the outer shape of the electrical component is shortest. It is relatively easy to increase a distance between the first front wall 10F and the second front wall 23. Therefore, by locating an electrical component having a greatest thickness in front of the container box 10, a width in a leftward/rightward direction of the rear cowling 24 can be reduced.

As illustrated in FIG. 2, the DC/DC converter 43 may be attached to the frame 33L at or behind a center portion C1 of the container box 10 in a forward/rearward direction of the vehicle 1. The center portion C1 of the container box 10 may be a center position of an inside dimension of the container box 10. Likewise, the VCU 41 may be attached to the frame 33R at or behind the center portion C1 of the container box 10. This allows a front left diagonal portion and a front right diagonal portion of the rear cowling 24 covering the container box 10 to be slim, and therefore, a portion for the rider's feet of the scooter type two-wheeled electric vehicle 1 can have a simple design.

The rear frames 33L and 33R are shaped to extend rearward and diagonally upward at a position lateral to the container box 10. The DC/DC converter 43 and the VCU 41 can be located at a higher position of the vehicle 1 by locating the DC/DC converter 43 and the VCU 41 on the frames 33L and 33R at or behind the center portion C1. Therefore, the DC/DC converter 43 and the VCU 41 are less likely to get wet even if water on the road surface enters the vehicle 1.

As illustrated in FIG. 3, the DC/DC converter 43 may be located inward of the rear frame 33L in a width direction (leftward/rightward direction) of the vehicle 1. As illustrated in FIG. 4, the VCU 41 may be provided inward of the rear frame 33R in a width direction of the vehicle 1. By locating an electrical component inward of the rear frame 33L, 33R, even if an external force is applied to a side portion of the vehicle 1, the external force can be substantially prevented from being applied to the electrical component. In addition, a width in a leftward/rightward direction of the rear cowling 24 can be reduced.

Other electrical components may be provided at a position between the first front wall 10F and the second front wall 23, a position between the first left side wall 10L and the second left side wall 24L, and a position between the first right side wall 10R and the second right side wall 24R. For example, the positioning device 44, the communication device 45, the MCU 46, and the like may be provided at such positions. A total of four or more electrical components may be provided at the three positions.

In the foregoing embodiments, the seat cowling 23 and the rear cowling 24 are provided as a cover for covering the container box 10. The seat cowling 23 and the rear cowling 24 may be integrally formed.

The batteries 51 and 52 may not be removable, and may be fixed to the vehicle 1 so that the batteries 51 and 52 cannot be removed. That the batteries 51 and 52 cannot be removed means that, for example, the batteries 51 and 52 are fixed to the vehicle 1 using a bolt and a nut or the like, and therefore, a certain tool is required in order to remove the batteries 51 and 52.

The electric motor 47 is not limited to an in-wheel motor. The electric motor 47 may be located away from the rear wheel 4, and rotation may be transmitted from the electric motor 47 to the rear wheel 4 through a power transmission mechanism.

In the foregoing, preferred illustrative embodiments have been described.

A scooter type electric vehicle 1 according to an embodiment includes: a front wheel 3 and a rear wheel 4; an electric motor 47 that produces rotation according to power supplied from a battery 51, 52, and drives at least one of the front wheel 3 and the rear wheel 4; a floorboard 6 that is located between the front wheel 3 and the rear wheel 4, and on which a rider's feet are placed; a seat 5 that is located behind and diagonally above the floorboard 6, and on which the rider sits; a container box 10 that is located below the seat 5, and has a first front wall 10F, a first left side wall 10L, and a first right side wall 10R; a cover 20 that has a second front wall 23 covering the first front wall 10F, a second left side wall 24L covering the first left side wall 10L, and a second right side wall 24R covering the first right side wall 10R; and a first electrical component 42 that is located between the first front wall 10F and the second front wall 23, a second electrical component 43 that is located between the first left side wall 10L and the second left side wall 24L, and a third electrical component 41 that is located between the first right side wall 10R and the second right side wall 24R.

If an attempt is made to arrange a plurality of electrical components that are mounted on the scooter type electric vehicle 1 all in one place, it is necessary to allocate, in the vehicle 1, a large space for arranging the plurality of electrical components together.

According to an embodiment, a plurality of electrical components are arranged at distributed positions that are a position between the first front wall 10F of the container box 10 and the second front wall 23 of the cover 20, a position between the first left side wall 10L of the container box 10 and the second left side wall 24L of the cover 20, and a position between the first right side wall 10R of the container box 10 and the second right side wall 24R of the cover 20. Therefore, it is not necessary to allocate, in the vehicle 1, a large space for arranging a plurality of electrical components all in one place. By utilizing spaces between the container box 10 and the cover 20, a slim volume can accommodate all of the electrical components.

A plurality of electrical components are distributed, but are arranged around the container box 10, so that a distance between each electrical component is relatively short. Therefore, the length of an electrical cable connecting between each electrical component can be reduced. For example, as a large current flows through an electrical component that is provided on an electrical path between the battery 51, 52 and the electric motor 47, an electrical cable connected to such an electrical component has a large cross-sectional area. By providing a plurality of electrical components around the container box 10, the lengths of electrical cables having a large cross-sectional area can be reduced, resulting in a reduction in a space for arranging the electrical cables. The reduction in the length of an electrical cable having a large cross-sectional area can lead to a reduction in weight and cost.

As electrical components are located around the container box 10, i.e., at a relatively high position, the electrical components are less likely to get wet even if water on the road surface enters the vehicle 1.

In an embodiment, the batteries 51 and 52 may be located in the container box 10.

As a large current flows through an electrical cable that connects the battery 51, 52 and an electrical component, the electrical cable has a large cross-sectional area. By providing a plurality of electrical components around the container box 10, the lengths of electrical cables having a large cross-sectional area that connect the battery 51, 52 and the electrical components can be reduced.

In an embodiment, the batteries 51 and 52 may be removably attached to the scooter type electric vehicle 1.

The batteries 51 and 52 can be charged by being connected to an external charger with the batteries 51 and 52 removed from the vehicle 1. For example, even when no charging equipment is provided in a parking garage, the batteries 51 and 52 can be charged.

In an embodiment, the first electrical component 42, the second electrical component 43, and the third electrical component 41 may have different functions.

As it is not necessary to allocate, in the vehicle 1, a large space for arranging a plurality of electrical components having different functions all in one place, a slim volume can accommodate all of the electrical components.

In an embodiment, the first electrical component 42, the second electrical component 43, and the third electrical component 41 may each be any of a control device 41 that controls an operation of the scooter type electric vehicle 1, a converter 43 that changes the magnitude of the output voltage of the battery 51, 52 and outputs the resultant voltage, a battery switcher 42 that switches a battery which is used between the batteries 51 and 52, a positioning device 44 that detects a location of the scooter type electric vehicle 1 in a geographic coordinate system, and a communication device 45 that performs data communication between the scooter type electric vehicle 1 and an external device.

It is not necessary to allocate, in the vehicle 1, a large space for arranging a plurality of electrical components all in one place, and a slim volume can accommodate all of the electrical components.

In an embodiment, the first electrical component 42 located between the first front wall 10F and the second front wall 23 may be thicker than the second electrical component 43 and the third electrical component 41.

It is relatively easy to increase a distance between the first front wall 10F and the second front wall 23. Therefore, by locating an electrical component having a greatest thickness in front of the container box 10, a width in a leftward/rightward direction of the cover 20 covering the container box 10 can be reduced.

In an embodiment, the scooter type electric vehicle 1 may further include a frame 33L that extends through a position between the first left side wall 10L and the second left side wall 24L, and a frame 33R that extends through a position between the first right side wall 10R and the second right side wall 24R. At least one of the second electrical component 43 and the third electrical component 41 may be located inward of the frame 33L, 33R in a width direction of the scooter type electric vehicle 1.

Even if an external force is applied to a side portion of the scooter type electric vehicle 1, the external force can be substantially prevented from being applied to an electrical component.

In an embodiment, the scooter type electric vehicle 1 may further include a frame 33L that extends through a position between the first left side wall 10L and the second left side wall 24L, and a frame 33R that extends through a position between the first right side wall 10R and the second right side wall 24R. At least one of the second electrical component 43 and the third electrical component 41 may be located on the frame 33L, 33R.

The second electrical component 43 and the third electrical component 41 can be easily located between the container box 10 and the cover 20.

In an embodiment, at least one of the second electrical component 43 and the third electrical component 41 may be located at or behind a center portion C1 of the container box 10 in a forward/rearward direction of the scooter type electric vehicle 1.

A front left diagonal portion and a front right diagonal portion of the cover 20 covering the container box 10 can be slimmed, and therefore, a portion for the rider's feet of the scooter type electric vehicle 1 can have a simple design.

In an embodiment, the scooter type electric vehicle 1 may further include a frame 33L that extends through a position between the first left side wall 10L and the second left side wall 24L, and a frame 33R that extends through a position between the first right side wall 10R and the second right side wall 24R. The frame 33L, 33R is shaped to extend rearward and diagonally upward at a position lateral to the container box 10. At least one of the second electrical component 43 and the third electrical component 41 may be located on the frame 33L, 33R at or behind the center portion C1 of the container box 10 in a forward/rearward direction of the scooter type electric vehicle 1.

A front left diagonal portion and a front right diagonal portion of the cover 20 covering the container box 10 can be slimmed, and therefore, a portion for the rider's feet of the scooter type electric vehicle 1 can have a simple design.

The second electrical component 43 and the third electrical component 41 can be located at a higher position. Therefore, the second electrical component 43 and the third electrical component 41 are less likely to get wet even if water on the road surface enters the vehicle 1.

In an embodiment, the scooter type electric vehicle 1 may further include a swingarm 17 that supports the rear wheel 4. The electric motor 47 may be provided on the swingarm 17.

As it is not necessary to allocate a space for arranging the electric motor 47 in the inside of the vehicle body of the scooter type electric vehicle 1, the flexibility of arrangement of parts other than the electric motor 47 can be increased.

In an embodiment, the scooter type electric vehicle 1 may be a scooter type two-wheeled electric vehicle.

In the scooter type two-wheeled electric vehicle 1, a number of parts need to be arranged within a limited space in the vehicle 1, and therefore, a limitation is imposed on arrangement of the parts. According to an embodiment, a plurality of electrical components are arranged at distributed positions that are a position between the first front wall 10F of the container box 10 and the second front wall 23 of the cover 20, a position between the first left side wall 10L of the container box 10 and the second left side wall 24L of the cover 20, and a position between the first right side wall 10R of the container box 10 and the second right side wall 24R of the cover 20. By utilizing spaces between the container box 10 and the cover 20, a slim volume can accommodate all of the electrical components.

The present teaching is particularly useful in the field of scooter type electric vehicles including an electric motor as a source of drive power.

## Claims

1. A scooter type electric vehicle (1) comprising:
a front wheel (3) and a rear wheel (4);
an electric motor (47) configured for producing rotation according to power supplied from a battery (51, 52), and configured for driving at least one of the front wheel (3) and the rear wheel (4);
a floorboard (6) located between the front wheel (3) and the rear wheel (4) in forward/rearward direction of the vehicle, wherein the floorboard (6) is configured to place a rider's feet;
a seat (5) located behind and diagonally above the floorboard (6) in forward/rearward direction and in upward/downward direction of the vehicle, wherein the seat (5) is configured for the rider to sit on;
a container box (10) located below the seat (5) in upward/downward direction of the vehicle, and having a first front wall (10F) in forward/rearward direction of the vehicle, and a first left side wall (10L) and a first right side wall (10R) in leftward/rightward direction of the vehicle;
a cover (20) having a second front wall (23) covering the first front wall (10F) in forward/rearward direction of the vehicle, and a second left side wall (24L) covering the first left side wall (10L) and a second right side wall (24R) covering the first right side wall (10R) in leftward/rightward direction of the vehicle; and
a first electrical component (42) located between the first front wall (10F) and the second front wall (23), a second electrical component (43) located between the first left side wall (10L) and the second left side wall (24L), and a third electrical component (41) located between the first right side wall (10R) and the second right side wall (24R).

2. The scooter type electric vehicle (1) according to claim 1, wherein the battery (51, 52) is located in the container box (10).

3. The scooter type electric vehicle (1) according to claim 1 or 2, wherein the battery (51, 52) is removably attached to the scooter type electric vehicle (1).

4. The scooter type electric vehicle (1) according to any of claims 1 to 3, wherein the first electrical component (42), the second electrical component (43), and the third electrical component (41) have different functions.

5. The scooter type electric vehicle (1) according to any of claims 1 to 4, wherein the first electrical component (42), the second electrical component (43), and the third electrical component (41) are each any of a control device (41) for controlling an operation of the scooter type electric vehicle (1), a converter (43) for changing the magnitude of an output voltage of the battery (51, 52), and outputting the changed voltage, a battery switcher (42) for switching batteries for use, a positioning device (44) for detecting a location of the scooter type electric vehicle (1) in a geographic coordinate system, and a communication device (45) for performing data communication between the scooter type electric vehicle (1) and an external device.

6. The scooter type electric vehicle (1) according to any of claims 1 to 5, wherein a thickness in forward/rearward direction of the vehicle of the first electrical component (42) located between the first front wall (10F) and the second front wall (23) is greater than a thickness in leftward/rightward direction of the vehicle of each of the second electrical component (43) and the third electrical component (41) in forward/rearward direction of the vehicle.

7. The scooter type electric vehicle (1) according to any of claims 1 to 6, further comprising:
a left frame (33L) extending through a position between the first left side wall (10L) and the second left side wall (24L) and
a right frame (33R) extending through a position between the first right side wall (10R) and the second right side wall (24R).

8. The scooter type electric vehicle (1) according to 7, wherein the left frame (33L) and the right frame (33R) are shaped to extend rearward and diagonally upward in forward/rearward direction and in upward/downward direction of the vehicle at a position lateral to the container box (10) in leftward/rightward direction of the vehicle.

9. The scooter type electric vehicle (1) according to claim 7 or 8, wherein at least one of the second electrical component (43) and the third electrical component (41) is located inward of the left frame (33L) and the right frame (33R) in a width direction of the vehicle (1).

10. The scooter type electric vehicle (1) according to any of claims 7 to 9, wherein at least one of the second electrical component (43) and the third electrical component (41) is located on the left frame (33L) or the right frame (33R).

11. The scooter type electric vehicle (1) according to any of claims 1 to 10, wherein at least one of the second electrical component (43) and the third electrical component (41) is located at or behind a center portion (C1) of the container box (10) in forward/rearward direction of the vehicle.

12. The scooter type electric vehicle (1) according to any of claims 1 to 11, further comprising:
a swingarm (17) for supporting the rear wheel (4), wherein
the electric motor (47) is provided on the swingarm (17).

13. The scooter type electric vehicle (1) according to claim 12, wherein a rear portion of the one of the left or right frame (33L, 33R) supports an upper portion of a shock absorber (37) and lower portion of the shock absorber (37) supports the swingarm (17) in a manner that allows the swingarm (17) to pivot.

14. The scooter type electric vehicle (1) according to any of claims 1 to 12, wherein a main frame (32) is shaped to extend from a head pipe (31) rearward and diagonally downward in forward/rearward direction and in upward/downward direction of the vehicle, then extend leftward and rightward in leftward/rightward direction of the vehicle, and then extend rearward in forward/rearward direction of the vehicle, a left frame (33L) is shaped to extend from a left rear portion of the main frame (32) rearward and diagonally upward in forward/rearward direction and in upward/downward direction of the vehicle, and a right frame (33R) is shaped to extend from a right rear portion of the main frame (32) rearward and diagonally upward in forward/rearward direction and in upward/downward direction of the vehicle.

15. The scooter type electric vehicle (1) according to any of claims 1 to 14, wherein the scooter type electric vehicle (1) is a scooter type two-wheeled electric vehicle.
